# EUROPÄISCHE PATENTSCHRIFT

(11) **EP 1 108 278 B1**
(45) Veröffentlichungstag und Bekanntmachung des Hinweises auf die Patenterteilung: **13.11.2002**
(21) Anmeldenummer: 99944115.7
(22) Anmeldetag: 23.08.1999
(51) Int. Cl.: H02G 11/00, F16L 3/015

(54) **LEITUNGSFÜHRUNGSANORDNUNG ZUM FÜHREN WENIGSTENS EINER LEITUNG**
LINE GUIDE DEVICE FOR GUIDING AT LEAST ONE LINE
DISPOSITIF DE GUIDAGE DE LIGNES DESTINE A AU MOINS UNE LIGNE

(30) Priorität: 02.09.1998 DE 19839966
(43) Veröffentlichungstag der Anmeldung: 20.06.2001
(73) Patentinhaber: Kabelschlepp GmbH, 57074 Siegen (DE)
(72) Erfinder: RICHTER, Wolfgang, D-57223 Kreuztal (DE)
(74) Vertreter: Neumann, Ditmar
(86) Internationale Anmeldenummer: EP9906184
(87) Internationale Veröffentlichungsnummer: WO00013277

(56) Entgegenhaltungen:
- EP-A- 0 490 022
- EP-A- 0 544 027
- DD-A- 265 449
- DE-A- 3 914 140
- DE-U- 9 016 870
- US-A- 4 672 805

## Beschreibung

Der Gegenstand der Erfindung bezieht sich auf eine Leitungsführungsanordnung aus Kunststoff zum Führen wenigstens einer Leitung mit den Merkmalen des Oberbegriffs des Anspruchs 1.

Zum Führen von Leitungen von einem ortsfesten Anschluß zu einem beweglichen Verbraucher werden Leitungsführungsanordnungen verwendet. Die Leitungsführungsanordnung ist an einem Ende an einem Festpunkt und mit ihrem anderen Ende mit dem beweglichen Verbraucher verbunden. Es sind Leitungsführungsanordnungen bekannt, die aus gelenkig miteinander verbundenen Kettengliedern aufgebaut sind. Solche Leitungsführungsanordnungen werden auch als Energieführungsketten bezeichnet Ein jedes Kettenglied weist einen Aufnahmeraum auf. Die Aufnahmeräume der einzelnen Kettenglieder bilden einen Führungskanal, in dem die Leitungen verlegt sind. Der Aufnahmeraum ist durch zwei voneinander beabstandete, einander gegenüberliegend angeordnete Kettenlaschen sowie durch einen oberen und einen unteren Steg begrenzt. Die Stege sind mit den Kettenlaschen verbunden. Zur Unterteilung des Führungskanals kann ein jedes Kettenglied mit Trennstegen versehen sein, so daß sowohl eine horizontale als auch eine vertikale Unterteilung des Führungskanals erreicht wird.

Durch die EP0490022A2 ist eine Leitungsführungsanordnung bekannt. Nach der EP0490022A2 wird vorgeschlagen, dass die in der Leitungsführungsanordnung geführten Leitungen mittels einer gemeinsamen Leitungsbündelungseinrichtung zusammengehalten werden sollen. An den Außenseiten der Leitungsbündelungseinrichtung sind wirksame Gleiteinrichtungen mit guter Gleitfähigkeit angeordnet, durch die eine Reibung zwischen Obertrum und Untertrum auch bei großer Leitungslänge vermindert werden soll. Die Leitungsbündelungseinrichtung kann durch in Längsrichtung der Leitungsanordnung im Abstand voneinander angeordnete, die Leitungen zusammenfassende Leitungsklemmen gebildet sein, an deren Außenseiten die Gleiteinrichtung angeordnet ist. Sie kann auch durch einen die Leitungen umfassenden Kabelmantel gebildet sein.

Zum Führen von Leitungen ist durch die DD 265 449 B5 eine Leitungsführungsanordnung bekannt, die einen Leitungsaufnahmekanal aufweist, der durch einen Tragwandbereich, einen Deckenwandbereich und Seitenwandbereiche begrenzt ist. Der Leitungsaufnahmekanal ist durch Quertrennungen in einer Vielzahl von relativ zueinander verschwenkbaren Segmenten unterteilt Die Quertrennungen erstrecken sich durch den Beckenbereich hindurch und setzen sich in die Seitenwandbereiche mindestens bis in die Nähe des Tragwandbereichs fort.

Eine weitere Ausgestaltung einer Leitungsführungsanordnung ist durch die EP 0 544 027 B1 bekannt. Auch die aus der EP 0 544 027 B1 bekannte Leitungsführungsanordnung dient zum Führen wenigstens einer in einem Leitungsaufnahmekanal verlegten Leitung. Der Leitungsaufnahmekanal weist einen Tragwandbereich, einen Deckenbereich und Seitenwandbereiche auf. Der Leitungsaufnahmekanal ist durch Quertrennungen in eine Vielzahl von relativ zueinander verschwenkbaren Segmenten unterteilt, so daß die Leitungsführungsanordnung unter Bildung eines ersten Trums und eines parallel dazu geführten zweiten Trums sowie eines schleifenartigen Übergangs zwischen den beiden Trums umlenkbar ist. Die Quertrennungen erstrecken sich durch den Deckenbereich hindurch. Sie setzen sich in die Seitenwandbereiche mindestens bis in die Nähe des Tragwandbereichs fort.

Leitungen, die in eine Leitungsführungsanordnung geführt werden sollen, wie sie aus der EP 0 544 027 B1 bekannt ist, können lediglich nebeneinander angeordnet werden. Eine Unterteilung des Leitungsführungskanals bei einer Leitungsführungsanordnung nach der EP 0 544 027 erfolgt durch Leitungstrennwände, die sich in Längsrichtung des Leitungsaufnahmekanals erstreken. Auch die Leitungstrennwände sind durch Quertrennungen durchtrennt. Die Quertrennungen erstrecken sich durch die Leitungstrennwände bis mindestens in die Nähe des Tragwandbereichs, um eine problemlose Schleifenbildung des jeweiligen Leitungsaufnahmekanals zu ermöglichen.

Eine weitere Ausgestaltungsform einer Leitungsführungsanordnung ist in G 90 16 870.4 U1 beschrieben. Diese Leitungsführungsanordnung weist eine Leitungsbündelungseinrichtung auf, durch die die Leitungen zusammengehalten werden. Die Leitungsbündelungseinrichtung kann schlauchförmig ausgebildet sein. An der Außenseite der Leitungsbündelungseinrichtung sind Gleiteinrichtungen mit guter Gleitfähigkeit angeordnet. Die Gleiteinrichtungen verhindern eine Reibung. zwischen der Leitungsbündelungseinrichtung.

Leitungsführungsanordnungen, wie sie durch die DD 265 449 B5 bzw. die EP 0 544 027 B1 bekannt sind, werden dadurch hergestellt, daß ein Profil aus einem Kunststoff extrudiert und anschließend mittels eines geeigneten Werkzeugs durchtrennt wird, so daß das Profil in einzelne Segmente unterteilt wird.

Durch die Unterteilung der Leitungsführungsanordnung in Segmente sind diese lediglich durch den Tragwandbereich miteinander verbunden. Dies führt zu einer verminderten Stabilität der Leitungsführungsanordnung. Sie weist eine relativ geringe Biege- bzw. Torsionssteifigkeit auf.

Hiervon ausgehend liegt der vorliegenden Erfindung die Aufgabe zugrunde, die bekannte Leitungsführungsanordnung so weiterzubilden, daß dieser einer erhöhte Stabilität verliehen wird, ohne daß dabei die Fähigkeit einer Schleifenbildung vermindert wird.

Diese Aufgabe wird erfindungsgemäß durch eine Leitungsführungsanordnung mit den Merkmalen des Anspruchs 1 gelöst. Vorteilhafte Weiterbildungen und Ausgestaltungen der erfindungsgemäßen Leitungsführungsanordnung sind Gegenstand der abhängigen Ansprüche.

Die erfindungsgemäße Leitungsführungsanordnung zum Führen wenigstens einer Leitung weist miteinander gelenkig verbundene Segmente auf. Jedes Segment weist Seitenwandbereiche auf. Die Leitungsführungsanordnung ist durch zwei im wesentlichen parallel verlaufende Stränge aus Kunststoff gebildet. Die Stränge sind durch Stege miteinander verbunden. Die Stege sind in gewählten Abständen zueinander mit gegenüberliegenden Segmenten verbunden. Die Segmente und die Stege begrenzen einen Führungskanal zum Führen wenigstens einer Leitung. Jeder Strang ist durch Quertrennungen in einen Strang mit Segmenten unterteilt. Die Quertrennungen verlaufen quer zur Längsrichtung des Strangs. Sie sind in gewählten Abständen zueinander ausgebildet. Die Quertrennungen erstrecken sich in dem Seitenwandbereich bis in die Nähe eines Tragwandbereichs. Die Stränge ermöglichen eine Schleifenbildung der Leitungsführungsanordnung. Die Stege, die mit den zwei im wesentlichen parallel verlaufenden Strängen verbunden sind, tragen die in dem Führungskanal angeordneten Leitungen. Die Stege als solche können eine relativ hohe Steifigkeit aufweisen, so daß die Leitungsführungsanordnung auch dazu geeignet ist, höhere Leitungsgewichte zu tragen. Sie verleihen der Leitungsführungsanordnung auch eine höhere Biege- und Torsionssteifigkeit.

Dadurch, daß die Leitungsführungsanordnung aus zwei parallelen Strängen besteht, die durch die Stege miteinander verbunden sind, kann vereinfacht eine Anpassung der Leitungsführungsanordnung an unterschiedliche Aufgaben der Leitungsführungsanordnung erfolgen. Durch Variation der Länge der Stege können unterschiedlich breite Leitungsführungsanordnungen bereitgestellt werden, ohne daß eine Modifikation der Stränge notwendig ist. Die Stege können auch mit Trennstegsystemen versehen sein, so daß eine bessere Ausnutzung der Querschnitts des Führungskanals erreicht wird.

Zu einer weiteren Erhöhung der Biege- und Torsionsfestigkeit der Leitungsführungsanordnung wird vorgeschlagen, daß wenigstens ein Strang wenigstens teilweise als ein Profilstrang ausgebildet ist. Der Profilstrang weist vorzugsweise einen im wesentlichen quer vom Seitenwandbereich hervorstehenden Tragwandbereich auf, wobei die Trennungen sich durch den Seitenwandbereich mindestens in die Nähe des Tragwandbereichs fortsetzen. Durch diese bevorzugte Ausgestaltung der Leitungsführungsanordnung wird eine breitere Auflagefläche der Leitungsführungsanordnung erreicht. Dies ist insbesondere dann vorteilhaft, wenn der Obertrum der Leitungsführungsanordnung auf dem Untertrum der Leitungsführungsanordnung gleitet.

Nach einer noch weiteren vorteilhaften Ausgestaltung der Leitungsführungsanordnung wird vorgeschlagen, daß der Profilstrang einen Deckenwandbereich und einen Tragwandbereich aufweist. Der Deckenwandbereich und der Tragwandbereich stehen im wesentlichen quer von dem Seitenwandbereich vor. Die Quertrennungen erstrecken sich durch den Deckenwandbereich hindurch. Sie setzen sich in dem Seitenwandbereich mindestens in die Nähe des Tragwandbereichs fort. Ein solcher Profilstrang kann auch als ein C-förmiger Profilstrang bezeichnet werden. Durch diese Ausgestaltung des Profilstrangs wird den einzelnen Segmenten der Leitungsführungsanordnung eine größere Steifigkeit verliehen. Der Tragwandbereich kann auch als Auflagefläche für einen Steg genutzt werden. Dies gilt auch für den Deckenwandbereich. Bei einer solchen Anordnung des Profilstrangs weist der Deckenwandbereich und der Tragwandbereich in den Führungskanal hinein.

Nach einer noch weiteren vorteilhaften Ausgestaltung der Leitungsführungsanordnung wird vorgeschlagen, daß der Profilstrang einen Deckenwandbereich, einen Tragwandbereich und einen Bodenwandbereich aufweist, die im wesentlichen quer von dem Seitenwandbereich vorstehen und mit dem Seitenwandbereich verbunden sind. Die Quertrennungen erstrecken sich durch den Deckenwandbereich hindurch. Sie setzen sich in dem Seitenwandbereich mindestens bis in die Nähe des Tragwandbereichs fort. Hierdurch werden die Segmente gebildet. Zusätzlich sind Ausnehmungen vorgesehen, die sich durch den Bodenwandbereich hindurch erstrecken. Die Ausnehmungen setzen sich in dem Seitenwandbereich mindestens bis in die Nähe des Tragwandbereichs fort. Hierdurch werden dem Profilstrang Krümmungsradiusbegrenzer verliehen. In Abhängigkeit von der Gestaltung der Ausnehmung, die beispielsweise V-förmig ausgebildet sein kann, wird der Verschwenkwinkel benachbarter Segmente begrenzt. Durch eine solche Ausgestaltung des Profilstrangs wird zum einen der Leitungsführungsanordnung eine höhere Steifigkeit verliehen und zum anderen kann auf zusätzliche Krümmungsradiusbegrenzer verzichtet werden.

Gemäß einer noch weiteren vorteilhaften Ausgestaltung der Erfindung wird vorgeschlagen, daß wenigstens ein Strang wenigstens teilweise als ein Hohlprofilstrang ausgebildet ist. Eine besonders hohe Steifigkeit der Leitungsfiihrungsanordnung wird dadurch erreicht, daß jeder Strang als ein Hohlprofilstrang ausgebildet ist.

Bevorzugt ist eine Ausbildung eines Hohlprofilstrangs, der einen Tragwandbereich und einen Bodenwandbereich aufweist, wobei sich der Seitenwandbereich bis zum Bodenbereich erstreckt. Ausnehmungen sind in dem Hohlprofilstrang vorgesehen. Sie erstrecken sich durch den Bodenwandbereich hindurch. Sie setzen sich in den Seitenwandbereich mindestens bis in die Nähe des Tragwandbereichs fort. Hierdurch ist der Hohlprofilstrang mit Krümmungsradiusbegrenzern versehen.

Nach noch einer weiteren vorteilhaften Ausgestaltung der Leitungsführungsanordnung wird vorgeschlagen, daß der Strang mit einem zwischen einem Deckenwandbereich und einem Bodenwandbereich ausgebildeten Tragwandbereich ausgebildet ist. Diese Ausgestaltung des Strangs kann relativ hohe Kräfte aufnehmen. Vorzugsweise weist der Hohlprofilstrang einen im wesentlichen rechteckförmigen Querschnitt auf. Andere Querschnitte können auch zur Ausbildung der Leitungsführungsanordnung geeignet sein. Insbesondere kann über die Gestaltung des Querschnitts des Hohlprofils die Steifigkeit des Hohlprofils beeinflußt werden.

Die Stege sind vorzugsweise in einem Bereich zwischen dem Deckenwandbereich und dem Tragwandbereich angeordnet. Besonders vorteilhaft ist eine Ausgestaltung der Leitungsführungsanordnung, bei der die Stege unterhalb des Tragwandbereichs angeordnet sind. Durch diese Anordnung der Stege wird erreicht, daß die Leitungen, die auf den Stegen liegen, im wesentlichen in der neutralen Phase der Leitungsführungsanordnung verlaufen. Die neutrale Phase verläuft innerhalb des Tragwandbereichs. Dadurch, daß die Leitungen im wesentlichen in der neutralen Phase verlaufen, werden diese nur einer sehr geringen mechanischen Beanspruchung ausgesetzt.

Zur Erleichterung der Montage wird durch eine weitere vorteilhafte Ausgestaltung der Leitungsführungsanordnung vorgeschlagen, daß wenigstens ein Steg mit einem Endbereich an dem Decken- und/oder dem Tragwandbereich bzw. Bodenwandbereich anliegt.

Die Stege sind vorzugsweise lösbar mit den Strängen verbunden. Die Verbindung der Stege mit den Strängen kann beispielsweise durch Schrauben erfolgen. Auch eine formschlüssige oder kraftschlüssige Verbindung eines Steges mit einem Strang ist möglich. Vorzugsweise weisen die Seitenwandbereiche Durchgangsöffhungen auf. Die Durchgangsöffnungen dienen zur Durchführung eines Befestigungselementes, welches einen Steg mit einem Seitenwandbereich eines Segmentes verbindet. Die Durchgangsöffnungen können bei ausgewählten oder allen Segmenten ausgebildet sein. Die Durchgangsöffnungen können durch Bohren hergestellt sein.

Gemäß einer noch weiteren vorteilhaften Ausgestaltung der Erfindung wird vorgeschlagen, daß an den Seitenwandbereichen ausgewählter oder aller Segmente Adapter zur Festlegung eines Stegs vorgesehen sind. Die Adapter können lösbar oder unlösbar mit den Seitenwandbereichen der Segmente verbunden sein. Durch Verwendung von unterschiedlichen Adaptern können auch bei gleichartiger Ausgestaltung der Stränge unterschiedliche Stege verwendet werden.

Um sicherzustellen, daß in den Führungskanal der Leitungsführungsanordnung keine Gegenstände, Schmutzpartikel oder dergleichen hineingelangen, wird vorgeschlagen, daß die Leitungsführungsanordnung wenigstens eine biegsame, sich in Längsrichtung der Leitungsführungsanordnung erstreckende Abdeckung aufweist. Die Abdeckung erhöht auch die Sicherheit der Leitungsführungsanordnung, da ein Hineingreifen in die Leitungsführungsanordnung wenigstens teilweise verhindert wird. Zur Festlegung der Abdeckung wird nach einer vorteilhaften Ausgestaltung der Leitungsführungsanordnung vorgeschlagen, daß die Stränge jeweils wenigstens einen sich in Längsrichtung der Leitungsführungsanordnung erstreckenden Schlitz aufweisen, die in einen Randbereich der Abdeckung hineinragt. Die Abdeckung kann aus Kunststoff bestehen. Sie kann auch aus einem metallischen Werkstoff bestehen.

Weitere Einzelheiten und Vorteile der erfindungsgemäßen Leitungsführungsanordnung werden anhand der in der Zeichnung dargestellten Ausführungsbeispiele erläutert. Es zeigen:
- Fig. 1: schematisch und in einer perspektivischen Darstellung ein erstes Ausführungsbeispiel einer Leitungsführungsanordnung,
- Fig. 2: in einer perspektivischen Darstellung ein zweites Ausführungsbeispiel einer Leitungsführungsanordnung,
- Fig. 3: ein drittes Ausführungsbeispiel einer Leitungsführungsanordnung in einer perspektivischen Darstellung,
- Fig. 4: ein weiteres Ausführungsbeispiel einer Leitungsführungsanordnung mit integrierten Krümmungsradiusbegrenzern,
- Fig. 5: ein weiteres Ausführungsbeispiel einer Leitungsführungsanordnung mit Strängen, die teilweise als Hohlprofile ausgebildet sind,
- Fig. 6: eine Einzelheit der Leitungsanordnung nach Fig. 5 in vergrößertem Maßstab,
- Fig. 7: ein weiteres Ausführungsbeispiel einer Leitungsführungsanordnung in einer perspektivischen Darstellung,
- Fig.8: schematisch ein weiteres Ausführungsbeispiel einer Leitungsführungsanordnung in einer perspektivischen Darstellung und
- Fig. 9: eine Teilansicht der Leitungsführungsanordnung nach Fig. 8 in einer Draufsicht.

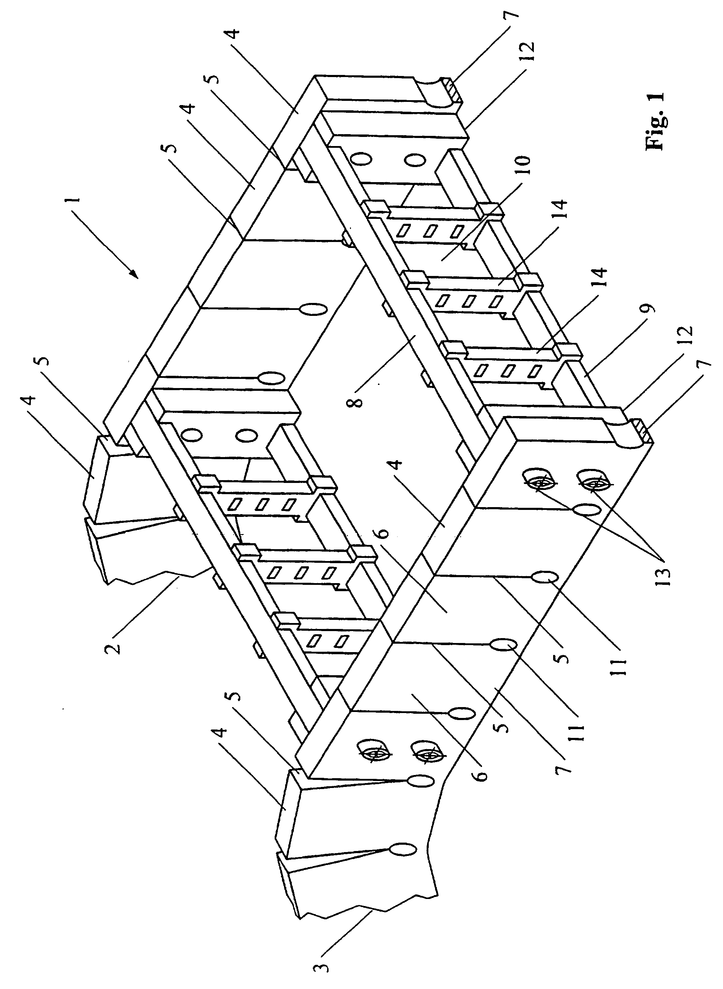

Fig. 1 zeigt in einer perspektivischen Darstellung ein erstes Ausführungsbeispiel einer Leitungsführungsanordnung 1, die zur Führung von wenigstens einer Leitung geeignet ist. In der Fig. 1 ist der besseren Übersicht wegen die wenigstens eine Leitung nicht dargestellt.

Die Leitungsführungsanordnung 1 weist zwei im wesentlichen parallel zueinander verlaufende Stränge 2, 3 auf. Jeder Strang 2, 3 ist einteilig ausgebildet. Bei dem Strang 2 und 3 handelt es sich um jeweils einen Strang aus einem Kunststoff. Die Stränge 2, 3 sind aus dem Kunststoff extrudiert.

Jeder Strang 2, 3 ist durch Quertrennungen 5 in Segmente 4 unterteilt. Die Quertrennungen 5 verlaufen im wesentlichen quer zur Längsrichtung des Strangs. Sie sind in gewählten Abständen zueinander ausgebildet. Die Quertrennungen 5 erstrecken sich in den Seitenwandbereichen 6 bis in die Nähe eines Tragwandbereichs 7. Aus der Darstellung nach Fig. 1 ist erkennbar, daß die Quertrennungen 5 in kreisförmige Aussparungen 11 übergehen. Durch die kreisförmigen Aussparungen 11 wird die Belastung im Bereich der Biegeachsen vermindert.

Der Strang 2 und der Strang 3 sind mittels Stegen 8, 9 miteinander verbunden. Die Stege 8, 9 sind in gewählten Abständen zueinander an den betreffenden Segmenten 4 befestigt. Zur Befestigung eines jeden Stegs 8, 9 sind Adapter 12 vorgesehen. Die Adapter 12 sind mittels Befestigungselementen 13 mit dem jeweiligen Seitenwandbereich 6 eines Segmentes 4 verbunden. Jeder Adapter 12 weist an denmn jeweiligen Endbereich eine Ausnehmung auf. In die Ausnehmungen sind die Stege 8, 9 einbringbar. Durch Verdrehen der Stege 8, 9 um ihre Längsachse erfolgt eine Festlegung der Stege 8, 9 in den Adapter 12.

Die Segmente 4 sowie die Stege 8, 9 begrenzen einen im wesentlichen im Querschnitt rechteckförmigen Führungskanal. In den Führungskanal 10 sind Leitungen einlegbar. Zur Unterteilung mehrerer Leitungen in einzelne Leitungen oder in Leitungsgruppen sind zwischen den Stegen 8, 9 Trennstege 14 vorgesehen. Die Trennstege 14 sind in Längsrichtung der Stege 8, 9 an frei wählbaren Stellen positionierbar. Die Trennstege 14 verlaufen im wesentlichen quer zu den Stegen 8, 9. Sofern es zweckmäßig ist, können weitere Trennstege vorgesehen sein, die im wesentlichen parallel zu den Stegen 8, 9 verlaufen und mit den in der Fig. 1 dargestellten Trennstegen 14 verbunden sind. Die Stege 8, 9 sowie die Trennstege 14 sowie gegebenenfalls weitere Trennstege bilden ein Trennstegsystem, welches unabhängig von der Ausgestaltung der Stränge 2, 3 ausgebildet sein kann. Durch die erfindungsgemäße Ausgestaltung der Leitungsführungsanordnung können unterschiedliche Unterteilungen des Führungskanals 10 verwirklicht werden. Es ist nicht zwingend notwendig, die Stränge 2, 3 an die unterschiedlichen Trennstegsysteme anzupassen.

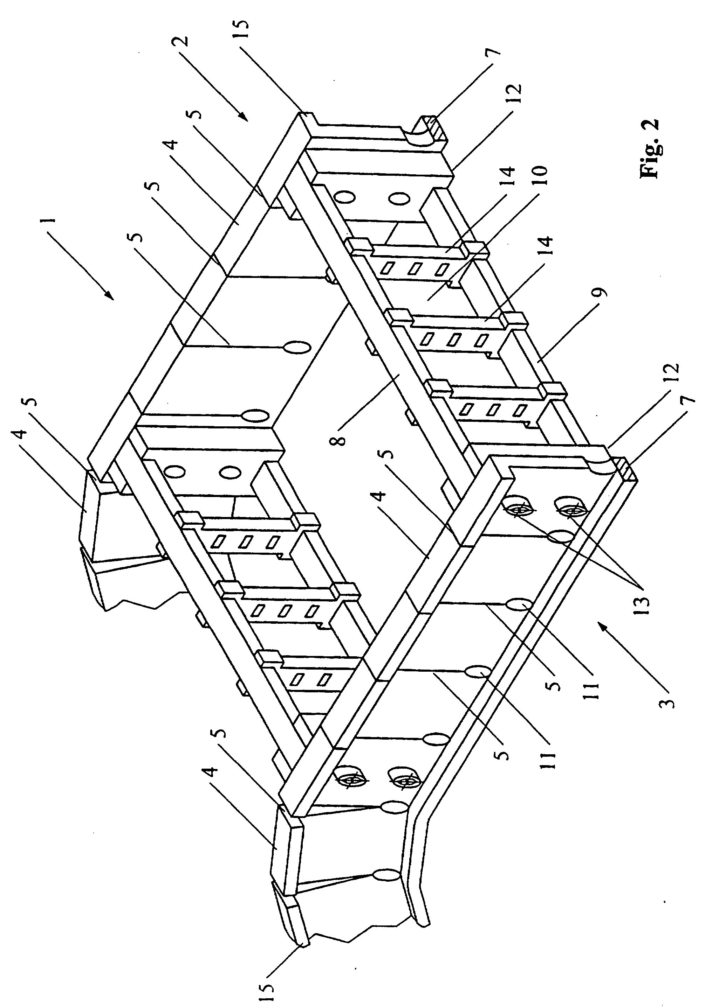

Fig. 2 zeigt ein zweites Ausführungsbeispiel einer Leitungsführungsanordnung. Die Leitungsführungsanordnung 1 ist eine Variation der in der Fig. 1 dargestellten Leitungsführungsanordnung.

Die Leitungsführungsanordnung 1 weist zwei im wesentlichen parallel zueinander verlaufende Stränge 2, 3 auf. Die Stränge 2, 3 sind als Profilstränge ausgebildet. Die Profilstränge 2, 3 weisen einen im wesentlichen quer vom Seitenwandbereich 6 vorstehenden Tragwandbereich 7 auf. Die Quertrennungen 5, durch die der Strang 2 bzw. 3 in einen Strang mit Segmenten 4 unterteilt ist, erstrecken sich durch den Seitenwandbereich 6 des jeweiligen Strangs 2, 3 bis zum Tragwandbereich 7. Auch bei der Leitungsführungsanordnung nach Fig. 2 gehen die Quertrennungen 5 in der Nähe des Tragwandbereichs 7 in im wesentlichen kreisförmige Aussparungen 11 über.

Die Stränge 2, 3 der Leitungsführungsanordnung 1 nach Fig. 2 weisen auch einen Deckenwandbereich 15 auf. Der Deckenwandbereich 15 verläuft im wesentlichen quer zu dem Seitenwandbereich 6. Der Tragwandbereich 7 und der Deckenwandbereich 15 verlaufen im wesentlichen parallel zueinander. In dem dargestellten Ausführungsbeispiel nach Fig. 2 sind die Stränge 2, 3 als C-förmige Profile ausgebildet. Andere Profilgestaltungen, insbesondere T-förmige, doppel-Tförmige, oder Z-förmige Ausbildungen sind möglich. Variationen dieser Profilgestaltungen sind ebenfalls möglich.

Auch der Deckenwandbereich 15 ist durch Quertrennungen 5 durchtrennt. In dem dargestellten Ausführungsbeispiel nach Fig. 2 sind der Tragwandbereich 7 und der Deckenwandbereich 15 auswärts gerichtet. Der Tragwandbereich 7 und der Deckenwandbereich 15 bilden eine gewisse Abdeckung der Befestigungselemente 13. Die Befestigungselemente 13 dienen zur Festlegung von Adaptern 12 an dem jeweiligen Strang 2, 3. Mit den Adaptern 12 sind Stege 8, 9 verbunden. Zwischen den Stegen 8, 9 sind Trennstege 14 angeordnet.

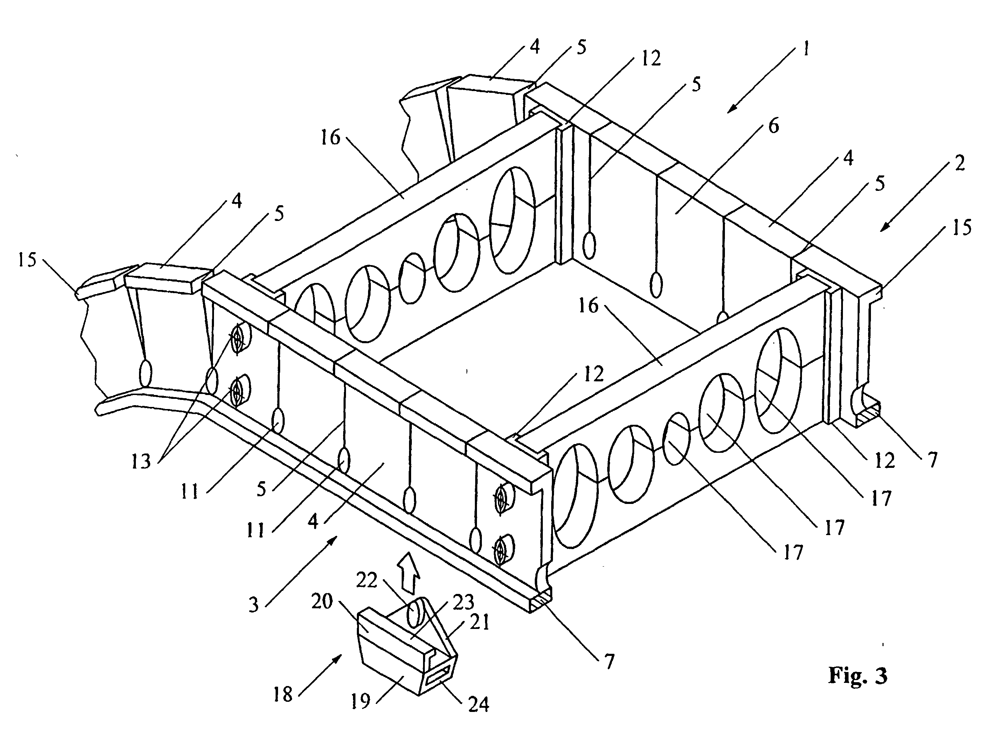

Fig. 3 zeigt ein weiteres Ausführungsbeispiel einer Leitungsführungsanordnung 1. Der prinzipielle Aufbau der Leitungsführungsanordnung 1 nach Fig. 3 entspricht dem Aufbau der Leitungsführungsanordnung 1 nach Fig. 2. Die Stränge 2, 3 der Leitungsführungsanordnung nach Fig. 3 sind gleich aufgebaut wie die Stränge 2, 3 der Leitungsführungsanordnung 1 nach Fig. 2. Es wird daher auf die Ausführungen zur Fig. 2 verwiesen.

Zwischen den Strängen 2, 3 sind Stege 16 angeordnet. Die Stege 16 sind als Lochstege ausgebildet. Sie weisen Löcher 17 auf, in denen die Leitungen geführt werden. Der Steg 16 ist zweiteilig ausgebildet. Die Stege 16 sind in gewählten Abständen zueinander an den betreffenden Segmenten justierbefestigt. Zur Befestigung eines jeden Stegs 16 sind Adapter 12 vorgesehen. Die Adapter 12 sind mittels der Befestigungselemente 13 mit dem betreffenden Segment 4 verbunden. Die Adapter 12 sind in dem dargestellten Ausführungsbeispiel U-förmig ausgebildet.

Zur Begrenzung eines Krümmungsradiusses im Bereich der Schleifenbildung der Leitungsführungsanordnung können an jedem Strang 2, 3 Begrenzungselemente 18 angeordnet werden. Das Begrenzungselement 18 weist einen Grundkörper 19 auf. Der Grundkörper 19 ist im Querschnitt trapezförmig ausgebildet. Er weist gegenüberliegend ausgebildete Anschlagflächen 24 auf. Von dem Grundkörper 19 erstreckt sich eine Lasche 21. Die Lasche 21 weist einen Kopf 22 auf. Im Abstand zur Lasche 21 ist eine weitere Lasche 20 vorgesehen. Die Lasche 20 weist einen Schenkel 23 auf, der dem Kopf 22 gegenüber liegt. Der Abstand des Schenkels 23 von einer Fläche des Grundkörpers 19 entspricht im wesentlichen der Dicke des Tragwandbereichs 7. Unter einer Dicke des Tragwandbereichs 7 wird die Abmessung des Tragwandbereichs 7 quer zur Längsrichtung der Leitungsführungsanordnung verstanden.

Das Begrenzungselement 18 wird an einem Strang dadurch festgelegt, daß der Kopf 22 in die Aussparung 11 eingreift. Der Schenkel 23 liegt auf dem Tragwandbereich 7 auf Der Seitenwandbereich 6 liegt zwischen den Laschen 20, 21. Durch entsprechende Neigung der Anschlagflächen 24 können unterschiedliche Verschwenkwinkel benachbarter Segmente 4 eingestellt werden.

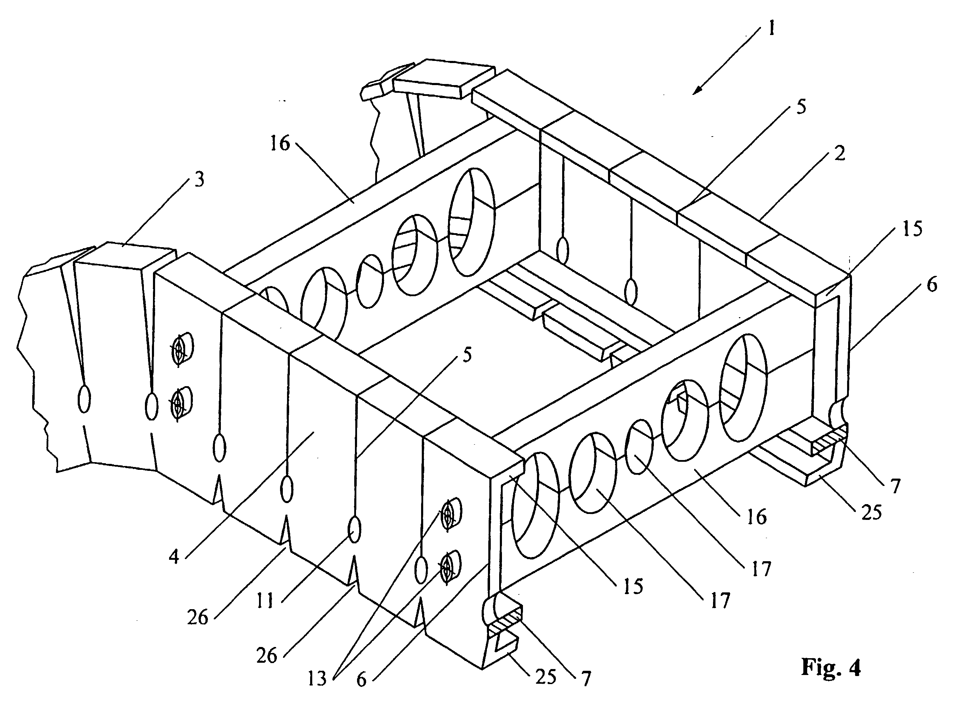

Fig. 4 zeigt eine weitere Ausführungsform einer Leitungsführungsanordnung 1. Die Leitungsführungsanordnung 1 weist zwei im wesentlichen parallel zueinander verlaufende Stränge 2, 3 auf Jeder Strang 2, 3 weist eine Vielzahl von Segmenten 4 auf. Die Segmente 4 sind durch Quertrennungen 5 voneinander getrennt.

Jeder Strang 2, 3 ist in Form eines Profilstrangs ausgebildet. Jeder Strang 2, 3 weist einen Deckenwandbereich 15, einen Tragwandbereich 7 und einen Bodenwandbereich 25 auf. Die Quertrennungen 5 erstrecken sich durch den Deckenwandbereich 15 hindurch und setzen sich im Seitenwandbereich mindestens bis in die Nähe des Tragwandbereichs 7 fort. Die Quertrennungen 5 erweitern sich in Aussparungen 11 mit einem kreisförmigen Querschnitt 11, wie dies bereits vorstehend beschrieben ist. Jeder Strang 2, 3 weist Ausnehmungen 26 auf, die sich durch den Bodenwandbereich 25 hindurch erstrecken. Die Ausnehmungen 26 setzen sich in den Seitenwandbereich 6 bis in die Nähe des Tragwandbereichs 7 fort. In dem dargestellten Ausführungsbeispiel verjüngen sich die Ausnehmunge 26 vom Bodenwandbereich 25 zum Tragwandbereich 7 hin. Der Winkel, unter dem sich die Ausnehmungen 26 zur Tragwand 7 hin verjüngen, bestimmt den Verschwenkwinkel benachbarter Segmente 4. Durch den Verschwenkwinkel benachbarter Segmente 4 wird auch der Krümmungsradius der Leitungsführungsanordnung festgelegt. Jeder Strang 2, 3 ist somit mit integrierten Krümmungsradiusbegrenzern ausgebildet.

Fig. 4 zeigt, daß die Deckenwandbereiche 15, die Tragwandbereiche 7 sowie die Bodenwandbereiche 25 einander zugewandt sind. Zwischen den Deckenwandbereichen 15 und den Tragwandbereichen 7 sind Stege 16 angeordnet. In dem dargestellten Ausführungsbeispiel handelt es sich um Lochstege, die mit Löchern 17 zur Aufnahme von Leitungen versehen sind. Der Steg 16 ist mittels Verbindungselementen 13 unmittelbar an den Seitenwandbereichen 6 der jeweiligen Segmente 4 festgelegt. Die Höhe des Stegs 16 ist vorzugsweise etwas größer als der Abstand zwischen den Deckenwandbereichen 15 und den Tragwandbereichen 7 der Stränge 2, 3, so daß der Steg 16 mit einer Preßpassung zwischen die Deckenwandbereiche 15 und die Tragwandbereiche 7 einbringbar ist, wodurch eine Montage des Stegs 16 erleichtert wird, da der Steg 16 durch den Tragwandbereich 7 und den Deckenwandbereich 15 des Strangs 2 bzw. des Strangs 3 gehalten wird. Anschließend kann der Steg 16 durch die Befestigungsmittel 13 festgelegt werden.

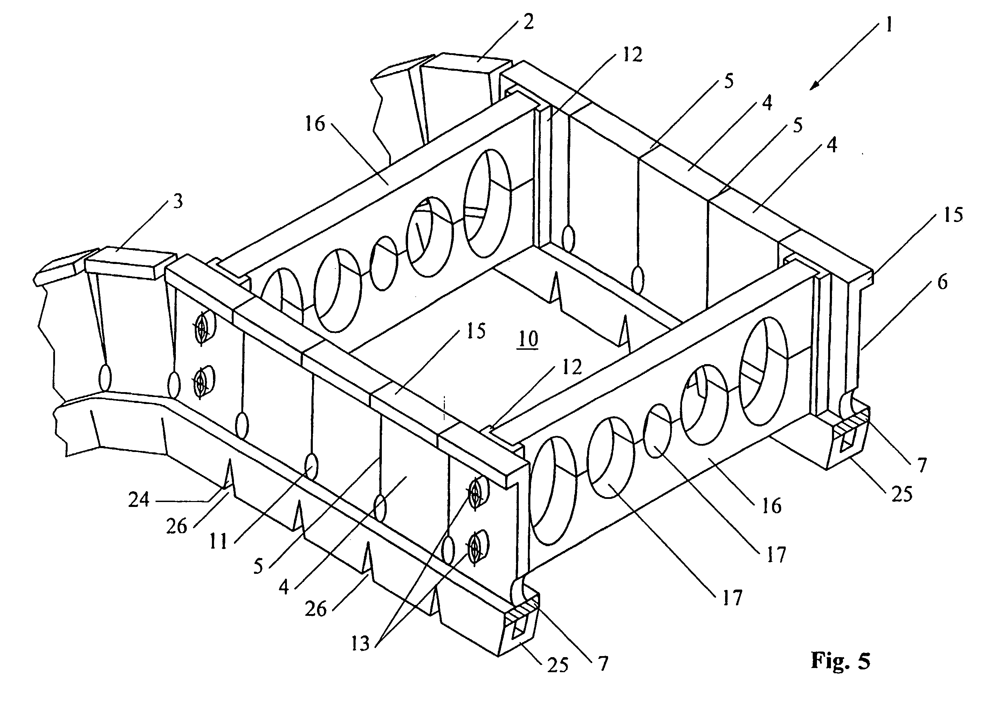

Fig. 5 zeigt ein weiteres Ausführungsbeispiel einer Leitungsführungsanordnung 1. Die Leitungsführungsanordnung 1 dient zur Führung von wenigstens einer Leitung in einem Führungskanal 10. Die Leitungsführungsanordnung umfaßt zwei im wesentlichen parallel zueinander verlaufende Stränge 2, 3. Jeder Strang 2, 3 ist einteilig ausgebildet. Jeder Strang 2, 3 ist durch Quertrennungen 5 in einen Strang 2, 3 mit Segmenten 4 unterteilt. In dem dargestellten Ausführungsbeispiel ist der Strang 2 und der Strang 3 wenigstens teilweise als ein Hohlprofilstrang ausgebildet. Der Hohlprofilstrang weist einen Tragwandbereich 7 und einen Bodenwandbereich 25 auf. Die Seitenwandbereiche 6 erstrecken sich bis zum Bodenwandbereich 25. Der als Hohlprofilstrang ausgebildete Abschnitt des Strangs 2, 3 ist in dem dargestellten Ausführungsbeispiel im wesentlichen rechteckförmig ausgebildet. Von dem rechteckförmigen Hohlprofil steht der Seitenwandbereich 6 ab. Der Seitenwandbereich 6 weist einen Deckenwandbereich 15 auf. Wie aus der Fig. 5 ersichtlich ist, ist der Seitenwandbereich 6 im wesentlichen mittig auf dem Hohlprofil ausgebildet.

Jeder Strang 2, 3 ist durch Stege 16 miteinander verbunden. Die Stege 16 sind in vorgewählten Abschnitten zueinander angeordnet. In dem dargestellten Ausführungsbeispiel ist der Steg 16 als ein Lochsteg mit Löchern 17 ausgebildet. Andere Steganordnungen sind ebenfalls möglich. Der Steg 16 ist mittels Adaptern 12 mit den Strängen 2, 3 verbunden. Der Steg 16 liegt auf dem Tragwandbereich 7 des Strangs 2 bzw. 3 auf. Dadurch, daß jeder Strang 2, 3 wenigstens teilweise als ein Hohlprofil ausgebildet ist, wird der Leitungsführungsanordnung eine erhöhte Festigkeit, insbesondere Torsionsfestigkeit verliehen.

Die Leitungsführungsanordnung 1 ist mit integrierten Krümmungsradiusbegrenzern ausgebildet. Die Krümmungsradiusbegrenzer werden durch die Abschnitte des Hohlprofilstrangs der Stränge 2, 3 gebildet. Wie aus der Fig. 5 ersichtlich ist, erstrecken sich durch den Bodenwandbereich 25 bis in die Nähe des Tragwandbereichs 7 Ausnehmungen 26, die sich zum Tragwandbereich 7 hin verjüngen. Die gegenüberliegenden Flächen der Ausnehmungen 26 bilden Anschlagflächen 24 für die Begrenzung des Verschwenkwinkels benachbarter Segmente. Die Ausnehmungen 26 fluchten im wesentlichen mit den Quertrennungen 5.

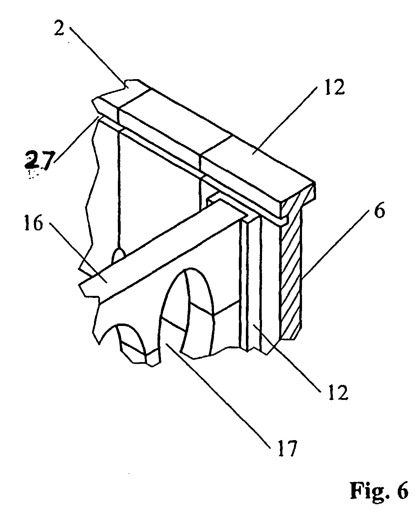

Zur Abdeckung des Führungskanals 10 kann mindestens eine Abdeckunge vorgesehen sein. Die Abdeckung besteht vorzugsweise aus einem biegsamen Band, das sich in Längsrichtung der Leitungsführungsanordnung erstreckt. Zur Festlegung der Abdeckung an der Leitungsführungsanordnung ist der Strang 2 mit Schlitzen 27 versehen, die sich in Längsrichtung der Leitungsführungsanordnung erstrecken. Die Schlitze 27 sind oberhalb bzw. unterhalb des Stegs 16 ausgebildet, wie die Fig. 6 zeigt. Vorzugsweise ist der Strang 2 mit zwei beabstandeten Schlitzen versehen, so daß zwei Abdeckungen vorgesehen werden können, zwischen denen die Stege 16 angeordnet sind. In entsprechender Weise ist auch der Strang 3 ausgebildet.

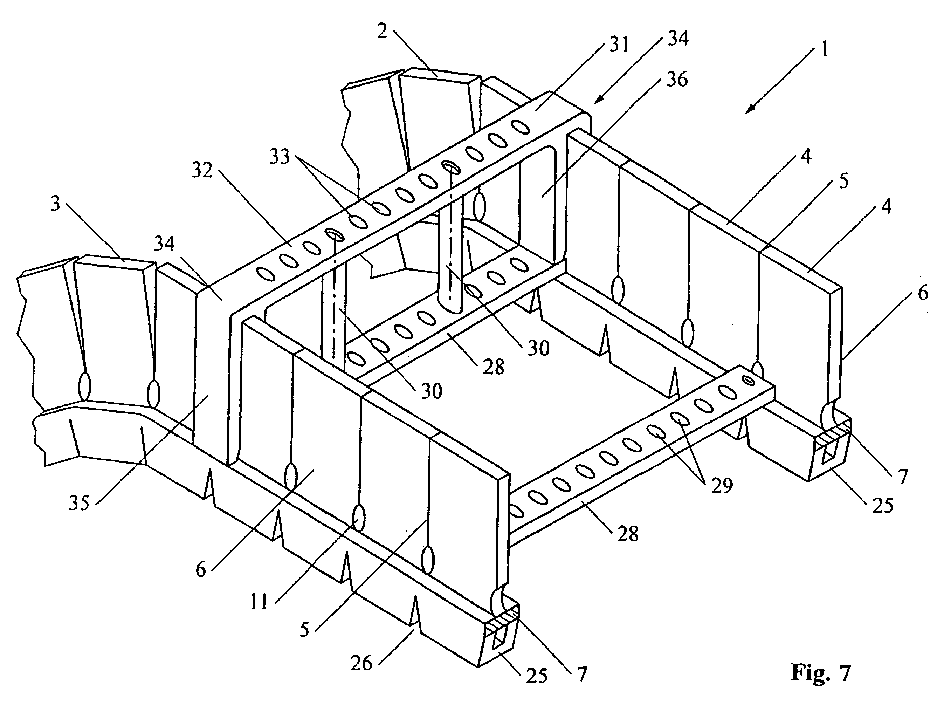

Fig. 7 zeigt ein weiteres Ausführungsbeispiel einer Leitungsführungsanordnung. Die Leitungsführungsanordnung ist durch die Stränge 2, 3 gebildet. Die Stränge 2, 3 sind teilweise als Hohlprofilstränge ausgebildet. Der prinzipielle Aufbau der Stränge 2, 3 entspricht dem Aufbau der Stränge 2, 3 nach Fig. 5, wobei in der Ausführungsform nach Fig. 7 jeder Strang 2, 3 keinen Deckenwandbereich aufweist, so daß die Segmente 4 rippenartig auf dem Hohlprofil ausgebildet sind.

Die Stränge 2, 3 sind durch Stege 28 miteinander verbunden. Die Stege 28 sind vorzugsweise mit den Strängen 2, 3 unlösbar verbunden. Insbesondere kann die Verbindung der Stege 28 mit den Strängen 2, 3 durch Kleben oder Schweißen erfolgen, wobei die Stege 28 für das Schweißen auch aus Kunststoff bestehen, so daß eine Kunststoffschweißung erfolgt.

Die Stege 28 sind im Bereich der Quertrennungen 5 angeordnet. Die Stege 28 weisen Bohrungen 29 auf, in die Trennstege 30 mit einem Endabschnitt hineinragen. Mit den Strängen 2, 3 sind auch bügelartig ausgebildete Stege 31 verbunden. Die Stege 31 weisen einen Abschnitt 32 auf, der oberhalb des Stegs 28 positioniert ist. Der Abschnitt 32 weist zu den Bohrungen 29 korrespondierende Bohrungen 33 auf, so daß die Trennstege 30 zwischen den Stegen 28, 31 angeordnet sind und durch diese festgelegt sind.

An den Abschnitt 32 schließen sich Umgriffe 34 an. Jeder Umgriff 34 ist durch eine Außenlasche 35 und durch eine Innenlasche 36 gebildet. Die Außenlasche 35 und die Innenlasche 36 verlaufen im wesentlichen parallel zueinander. Der Abstand der Außenlasche 35 zu der Innenlasche 36 ist so bemessen, daß zwischen diese ein Abschnitt eines Seitenwandbereichs 6 einbringbar ist.

Zur Festlegung des Stegs 31 an dem Strang 2 bzw an dem Strang 3 weist die Außenlasche 34 und/oder die Innenlasche 35 des jeweiligen Umgriffs 34 einen nicht dargestellten Vorsprung auf, der in die Aussparung 11 hineinragt. Durch diese zumindest formschlüssige Verbindung zwischen dem Steg 31 und dem Strang 2 sowie dem Strang 3 wird sichergestellt, daß während des Betriebs der Leitungsführungsanordnung der Steg 31 sicher mit der Leitungsführungsanordnung verbunden ist. Die Erstreckung des Stegs 31 in Längsrichtung der Leitungsführungsanordnung ist größer als der sich im maximalen Verschwenkzustand der Leitungsführungsanordnung bildende Spalt zwischen den benachbarten Segmenten 4.

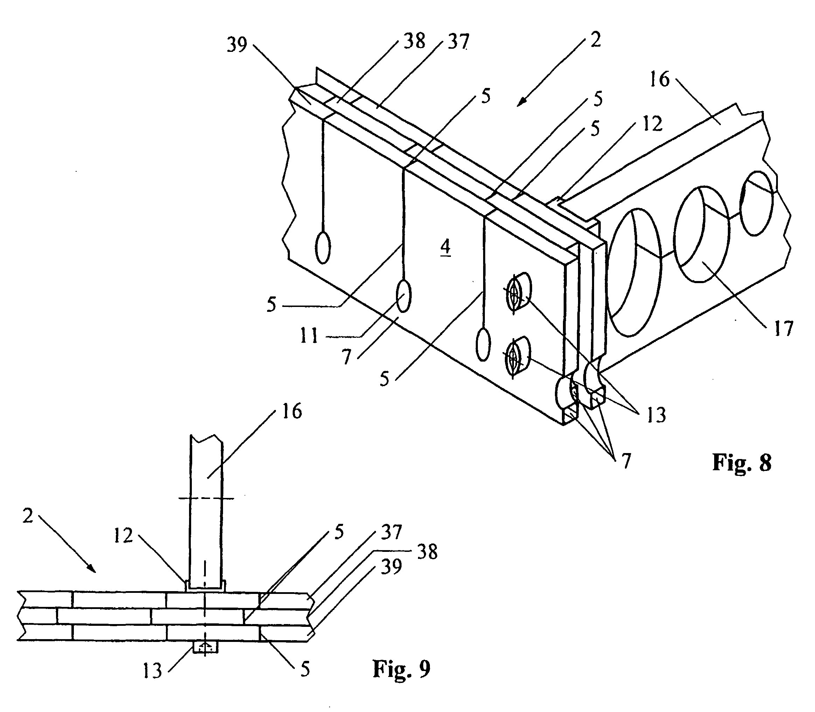

Fig. 8 und 9 zeigen eine weitere Ausführungsform einer Leitungsführungsanordnung. Die Leitungsführungsanordnung ist durch Stränge gebildet, wobei in den Fig. 5 und 6 lediglich ein Strang 2 dargestellt ist. In entsprechender Weise kann der weitere Strang der Leitungsführungsanordnung ausgebildet sein. Der Strang 2 ist in dem dargestellten Ausführungsbeispiel durch drei Teilstränge 37, 38, 39 gebildet. Jeder Teilstrang 37, 38, 39 ist durch Quertrennungen 5 in einen Teilstrang mit Segmenten 4 unterteilt. Die Quertrennungen 5 in den Teilsträngen 37, 38, 39 sind zueinander versetzt angeordnet. In dem dargestellten Ausführungsbeispiel fluchten die Quertrennungen 5 der Teilstränge 37, 39 miteinander. Hierdurch wird eine höhere Steifigkeit des Strangs 2 erreicht. Der Strang 2 kann auch lediglich durch zwei Teilstränge gebildet sein. Mehr als drei Teilstränge sind ebenfalls möglich. Durch das Versetzen der Quertrennungen zueinander wird auch eine Verletzungsgefahr der Leitungsführungsanordnung vermieden.

### Bezugszeichenliste:

- 1: Leitungsführungsanordnung
- 2, 3: Strang
- 4: Segmente
- 5: Quertrennung
- 6: Seitenwandbereich
- 7: Tragwandbereich
- 8, 9: Steg
- 10: Führungskanal
- 11: Aussparung
- 12: Adapter
- 13: Befestigungselement
- 14: Trennsteg
- 15: Deckenwandbereich
- 16: Steg
- 17: Loch
- 18: Begrenzungselement
- 19: Grundkörper
- 20, 21: Lasche
- 22: Kopf
- 23: Schenkel
- 24: Anschlagfläche
- 25: Bodenwandbereich
- 26: Ausnehmung
- 27: Schlitz
- 28: Steg
- 29: Bohrung
- 30: Trennsteg
- 31: Steg
- 32: Abschnitt
- 33: Bohrung
- 34: Umgriff
- 35: Außenlasche
- 36: Innenlasche
- 37, 38, 39: Teilstrang

## Patentansprüche

1. Leitungsführungsanordnung, bei der wenigstens eine Leitung durch einen im Querschnitt im wesentlichen rechteckförmigen, in seiner Längsrichtung in einer Ebene nach Art einer Kette gelenkig ausgebildeten Führungskanal (10) geführt ist, wobei
die Seitenwände des Führungskanals (10) durch zwei im wesentlichen parallele Stränge (2,3) aus Kunststoff gebildet sind,
jeder Strang (2, 3) durch Quertrennungen (5) in Segmente (4) unterteilt ist,
die Quertrennungen (5) in gewählten Längsabständen eines jeden Stranges (2, 3) quer zu dessen Längsrichtung ausgebildet sind und von der einen Kante des Stranges ausgehen und bis nahe dem Bereich der gegenüberliegenden Kante reichen, wobei dieser nicht durchtrennte Bereich als die Segmente (4) miteinander verbindender Tragwandbereich (7) dient;
die beiden Stränge (2, 3) in gewählten Längsabständen durch als gesonderte Bauteile ausgeführte Stege (8, 9, 16, 28, 31) miteinander verbunden sind, **dadurch gekennzeichnet,**
**dass** die Stege (8, 9, 16, 28, 31) als Träger der mindestens einen Leitung ausgebildet sind und
**dass** die beiden Stränge (2, 3) und die Stege (8, 9, 16, 28, 31) zusammen den Führungskanal (10) der mindestens einen Leitung bilden.

2. Leitungsführungsanordnung nach Anspruch 1, **dadurch gekennzeichnet, dass** wenigstens ein Strang (2, 3) wenigstens teilweise als ein Profilstrang ausgebildet ist.

3. Leitungsführungsanordnung nach Anspruch 2, **dadurch gekennzeichnet, dass** der Profilstrang einen von seiner einen Kante ausgehenden Deckenwandbereich (15) aufweist, dass der Deckenwandbereich (15) und der Tragwandbereich (7) im wesentlichen quer von dem Seitenwandbereich (6) vorstehen, wobei die Quertrennungen (5) sich durch den Deckenwandbereich (15) hindurch erstrecken.

4. Leitungsführungsanordnung nach Anspruch 1, **dadurch gekennzeichnet, dass** wenigstens ein Strang (2, 3) wenigstens teilweise als ein Hohlprofilstrang ausgebildet ist.

5. Leitungsführungsanordnung nach Anspruch 4, **dadurch gekennzeichnet, dass** der Hohlprofilstrang einen im wesentlichen rechteckförmigen Querschnitt aufweist.

6. Leitungsführungsanordnung nach einem der Ansprüche 3 bis 5, **dadurch gekennzeichnet, dass** die Stege (8, 9, 16, 28) in einem Bereich zwischen dem Deckenwandbereich (15) und dem Tragwandbereich (7) angeordnet sind.

7. Leitungsführungsanordnung nach einem der Ansprüche 1 bis 5, **dadurch gekennzeichnet, dass** die Stege (8, 9, 16) unterhalb des Tragwandbereichs (7) angeordnet sind.

8. Leitungsführungsanordnung nach Anspruch 6 oder 7, **dadurch gekennzeichnet, dass** wenigstens ein Steg (8, 9, 16, 28, 31) mit einem Endbereich an dem Deckenwandbereich (15) oder dem Tragwandbereich (7) anliegt.

9. Leitungsführungsanordnung nach einem der Ansprüche 1 bis 8, **dadurch gekennzeichnet, dass** die Stege (8, 9, 16, 28, 31) lösbar mit den Strängen (2, 3) verbunden sind.

10. Leitungsführungsanordnung nach einem der Ansprüche 1 bis 14, **dadurch gekennzeichnet, dass** an den Seitenwandbereichen (6) ausgewählter oder aller Segmente (4) Adapter (12) zur Festlegung wenigstens eines Stegs (8, 9, 16) vorgesehen sind.

11. Leitungsführungsanordnung nach einem der Ansprüche 1 bis 10, **dadurch gekennzeichnet, dass** an jeder Verbindungsstelle der beiden Stränge (2, 3) jeweils zwei Stege (8, 9) im Abstand voneinander angeordnet sind, und dass zwischen diesen beiden Stegen (8, 9) Trennstege (14) vorgesehen sind, die im wesentlichen quer zu den Stegen (8, 9) verlaufen und an frei wählbaren Stellen positionierbar sind.

12. Leitungsführungsanordnung nach Anspruch 11, **dadurch gekennzeichnet, dass** zwischen den Trennstegen (14) weitere Unterteilungsstege einsetzbar sind.

13. Leitungsführungsanordnung nach einem der Ansprüche 1 bis 10, **dadurch gekennzeichnet, dass** die Stege (16) Löcher (17) zur Führung von Leitungen aufweisen.

14. Leitungsführungsanordnung nach einem der Ansprüche 1 bis 10, **dadurch gekennzeichnet, dass** an jeder Verbindungsstelle der beiden Stränge (2, 3) jeweils zwei Stege (28, 31) im Abstand voneinander angeordnet sind, und dass die Stege (28, 31) Bohrungen (29) aufweisen, in die Trennstege (30) mit einem Endabschnitt hineinragen.

15. Leitungsführungsanordnung nach Anspruch 15, **dadurch gekennzeichnet, dass** der eine (31) der beiden Stege mit einer Außenlasche (35) und einer Innenlasche (36) den Abschnitt eines Seitenwandbereichs (6) umgreifend ausgebildet ist.

## Claims

1. A line guiding arrangement, in which at least one line is guided through a guide channel (10) of substantially rectangular cross-section that is hingedly configured in its longitudinal direction in a plane in a chain-like manner, wherein
the side walls of the guide channel (10) are formed by two substantially parallel strands (2, 3) made of plastic,
each strand (2, 3) is subdivided by transverse separations (5) into segments (4),
the transverse separations (5) are formed in selected longitudinal spaces of each strand (2, 3) transversally to its longitudinal direction and with the transverse separations (5) extending from one edge of the strand to the vicinity of the portion of the edge oppositely disposed, wherein this portion being not subdivided serves as support wall portion (7) connecting the segments (4) to one another,
the two strands (2, 3) are connected to each other in selected longitudinal spaces by cross-bars (8, 9, 16, 28, 31) realized as separate structural components, **characterized in that**
the cross-bars (8, 9, 16, 28, 31) are formed as support for the at least one line and that the two strands (2, 3) and the cross-bars (8, 9, 16, 28, 31) form together the guide channel (10) of the at least one line.

2. Line guiding arrangement according to claim 1, **characterized in that** at least one strand (2, 3) is formed at least partially as a profiled strand.

3. Line guiding arrangement according to claim 2, **characterized in that** the profiled strand has a cover wall portion (15) extending from its one edge, **in that** the cover wall portion (15) and the support wall portion (7) project substantially transversally from the side wall portion (6), wherein the transverse separations (5) extend through the cover wall portion (15).

4. Line guiding arrangement according to claim 1, **characterized in that** at least one strand (2, 3) is formed at least partially as a hollow profiled strand.

5. Line guiding arrangement according to claim 4, **characterized in that** the hollow profiled strand has a substantially rectangular cross-section.

6. Line guiding arrangement according to one of claims 3 to 5, **characterized in that** the cross-bars (8, 9, 16, 28, 31) are arranged in a portion between the cover wall portion (15) and the support wall portion (7).

7. Line guiding arrangement according to one of claims 1 to 5, **characterized in that** the cross-bars (8, 9, 16) are arranged below the support wall portion (7).

8. Line guiding arrangement according to claim 6 or 7, **characterized in that** at least one cross-bar (8, 9, 16, 28, 31) bears with one end portion against the cover wall portion (15) or the support wall portion (7).

9. Line guiding arrangement according to one of claims 1 to 8, **characterized in that** the cross-bars (8, 9, 16, 28, 31) are releasably connected to the strands (2, 3).

10. Line guiding arrangement according to one of claims 1 to 14, **characterized in that** on the side wall portions (6) of selected segments or of all segments (4) adapters (12) for securing at least one cross-bar (8, 9, 16) are provided.

11. Line guiding arrangement according to one of claims 1 to 10, **characterized in that** at each junction of the two strands (2, 3) two cross-bars (8, 9) are arranged respectively in a spaced relationship and that between these two cross-bars (8, 9) partitions (14) are provided, which extend substantially transversally to the cross-bars (8, 9) and which can be positioned at freely selectable locations.

12. Line guiding arrangement according to claim 11, **characterized in that** between the partitions (14) further subdivision cross-bars can be introduced.

13. Line guiding arrangement according to one of claims 1 to 10, **characterized in that** the cross-bars (16) comprise holes (17) for guiding lines.

14. Line guiding arrangement according to one of claims 1 to 10, **characterized in that** at each junction of the two strands (2, 3) two cross-bars (28, 31) respectively are arranged in a spaced relationship and that the cross-bars (28, 31) comprise bores (29) into which partitions (30) extend with an end section.

15. Line guiding arrangement according to claim 15, **characterized in that** one (31) of the two cross-bars is formed with an outer strap (35) and an inner strap (36) surrounding the portion of a side wall portion (6).

## Revendications

1. Système de guidage de lignes, dans lequel au moins une ligne est guidée à travers un canal de guidage (10) de section sensiblement rectangulaire et étant réalisé de manière articulée dans un plan à la façon d'une chaîne dans sa direction longitudinale, dans quel cas
les parois latérales du canal de guidage (10) sont formées par deux brins (2, 3) sensiblement parallèles en matière plastique,
chaque brin (2, 3) est subdivisé par des séparations transversales (5) en segments (4),
les séparations transversales (5) sont réalisées dans des écarts longitudinaux choisis de chaque brin (2, 3) transversalement à sa direction longitudinale et les séparations transversales (5) s'étendant à partir d'un bord du brin et allant jusqu'à proximité du bord opposé, cette zone non subdivisée servant de zone de paroi de support (7) reliant entre-eux les segments (4) ;
les deux brins (2, 3) sont reliés entre-eux dans des écarts longitudinaux par des entretoises (8, 9, 16, 28, 31) réalisées en tant que pièces de construction séparées, **caractérisé en ce que**
les entretoises (8, 9, 16, 28, 31) sont réalisées en tant que support de l'au moins une ligne et **en ce que** les deux brins (2, 3) et les entretoises (8, 9, 16, 28, 31) forment ensemble le canal de guidage (10) de l'au moins une ligne.

2. Système de guidage de lignes selon la revendication 1, **caractérisé en ce que** l'au moins un brin (2, 3) est au moins partiellement réalisé en tant que brin profilé.

3. Système de guidage de lignes selon la revendication 2, **caractérisé en ce que** le brin profilé présente une zone de paroi de couvercle (15) s'étendant à partir d'un de ses bords, **en ce que** la zone de paroi de couvercle (15) et la zone de paroi de support (7) font saillie sensiblement de manière transversale à partir de la zone de paroi latérale (6), les séparations transversales (5) s'étendant à travers la zone de paroi de couvercle (15).

4. Système de guidage de lignes selon la revendication 1, **caractérisé en ce qu'**au moins un brin (2, 3) est réalisé au moins partiellement en tant que brin à profil creux.

5. Système de guidage de lignes selon la revendication 4, **caractérisé en ce que** le brin à profil creux présente une section de forme sensiblement rectangulaire.

6. Système de guidage de lignes selon l'une des revendications 3 à 5, **caractérisé en ce que** les entretoises (8, 9, 16, 28) sont agencées dans une zone entre la zone de paroi de couvercle (15) et la zone de paroi de support (7).

7. Système de guidage de lignes selon l'une des revendications 1 à 5, **caractérisé en ce que** les entretoises (8, 9, 16) sont agencées au-dessous de la zone de paroi de support (7).

8. Système de guidage de lignes selon la revendication 6 ou 7, **caractérisé en ce qu'**au moins une entretoise (8, 9, 16, 28, 31) s'applique contre la zone de paroi de couvercle (15) ou contre la zone de paroi de support (7) avec un tronçon d'extrémité.

9. Système de guidage de lignes selon l'une des revendications 1 à 8, **caractérisé en ce que** les entretoises (8, 9, 16, 28, 31) sont reliées de manière détachable aux brins (2, 3).

10. Système de guidage de lignes selon l'une des revendications 1 à 14, **caractérisé en ce qu'**au niveau des zones de parois latérales (6) de segments choisis ou de tous les segments (4) des adaptateurs (12) pour le fixage d'au moins une entretoise (8, 9, 16) sont prévus.

11. Système de guidage de lignes selon l'une des revendications 1 à 10, **caractérisé en ce qu'**au niveau de chaque endroit de liaison des deux brins (2, 3) respectivement deux entretoises (8, 9) sont agencées à distance l'une de l'autre et **en ce qu'**entre ces deux entretoises (8, 9) des entretoises de séparation (14) sont prévues, qui s'étendent sensiblement de manière transversale aux entretoises (8, 9) et qui sont positionnables à des endroits pouvant être choisis librement.

12. Système de guidage de lignes selon la revendication 11, **caractérisé en ce qu'**entre les entretoises de séparation (14) d'autres entretoises de subdivision peuvent être introduites.

13. Système de guidage de lignes selon l'une des revendications 1 à 10, **caractérisé en ce que** les entretoises (16) présentent des trous (17) destinés au guidage de lignes.

14. Système de guidage de lignes selon l'une des revendications 1 à 10, **caractérisé en ce qu'**à chaque endroit de liaison des deux brins (2, 3) respectivement deux entretoises (28, 31) sont agencées à distance l'une de l'autre et **en ce que** les entretoises (28, 31) présentent des alésages (29), dans lesquelles s'avancent des entretoises de séparation (30) avec une zone d'extrémité.

15. Système de guidage de lignes selon la revendication 15, **caractérisé en ce que** l'une (31) des deux entretoises est réalisée avec une éclisse extérieure (35) et une éclisse intérieure (36) enserrant le tronçon d'une zone de paroi latérale (6).
